# EUROPEAN PATENT SPECIFICATION

(11) **EP 2 493 242 B1**
(45) Date of publication and mention of the grant of the patent: **12.12.2018**
(21) Application number: 10824978.0
(22) Date of filing: 20.10.2010
(51) Int. Cl.: H04W 36/14, H04M 11/00, H04W 76/00, H04W 48/18, H04W 36/00, H04W 48/20

(54) **MOBILE COMMUNICATION CONTROL DEVICE, MOBILE COMMUNICATION SYSTEM, AND MOBILE COMMUNICATION METHOD**
MOBILKOMMUNIKATIONSSTEUERVORRICHTUNG, MOBILKOMMUNIKATIONSSYSTEM UND MOBILKOMMUNIKATIONSVERFAHREN
DISPOSITIF DE COMMANDE DE COMMUNICATION MOBILE, SYSTÈME DE COMMUNICATION MOBILE, ET PROCÉDÉ DE COMMUNICATION MOBILE

(30) Priority: 20.10.2009 JP 2009241908
(43) Date of publication of application: 29.08.2012
(73) Proprietor: NTT DOCOMO, INC., Chiyoda-ku Tokyo (JP)
(72) Inventor: AOYAGI, Kenichiro, Tokyo 100-6150 (JP); IWAMURA, Mikio, Tokyo 100-6150 (JP)
(74) Representative: Hoffmann Eitle
(86) International application number: PCT/JP2010/068484
(87) International publication number: WO 2011/049129

(56) References cited:
- EP-A2- 1 802 158
- WO-A1-2006/095652
- JP-A- 2000 358 267
- JP-A- 2009 060 296
- JP-A- 2009 529 830
- US-A1- 2007 213 059
- US-A1- 2009 111 468
- QUALCOMM: "PS service continuity when moving between 3G and 2G", 3GPP DRAFT; R2-030585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 20030224, 24 February 2003 (2003-02-24), XP050123200, [retrieved on 2003-02-24]

## Description

### TECHNICAL FIELD

The present invention relates to a mobile communication terminal configured to perform cell reselection from a first communication system to a second communication system, a mobile communication controller, a mobile communication system, and a mobile communication method.

### BACKGROUND ART

EP 1 802 158 A1 discloses a method of performing a periodic public land mobile network (PLMN) search for a mobile station in a CELL_PCH state of radio resource control connected mode in a universal mobile telecommunications system (UMTS).

The 3GPP contribution "PS service continuity when moving between 3G and 2G" by QUALCOMM, 3GPP DRAFT; R2-030585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 20030224, 24 February 2003 (2003-02-24), proposes changes to the Cell Change Order From UTRAN procedure.
In a first communication system such as a UMTS (Universal Mobile Telecommunication System), a mobile communication terminal in an idle state or a connected state can perform cell reselection to a second communication system such as a GSM (Global System for Mobile Communication) and an LTE (Long Term Evolution) in accordance with information broadcast from networks.

### PRIOR ART DOCUMENT

### PATENT DOCUMENT

Patent Document 1: Patent Publication JP2009-501471

### SUMMARY OF THE INVENTION

When the mobile communication terminal performs cell reselection from the first communication system to the second communication system, a communication resource of the first communication system remains reserved until the first communication system detects release of the communication resource. Alternatively, the communication resource of the first communication system remains reserved until the mobile communication terminal requests the release of the communication resource.

Thus, the communication resource of the first communication system remains as a redundant resource when the mobile communication terminal performs cell reselection from the first communication system to the second communication system.

The present invention has been made to solve the above problem, and an objective of the present invention is to provide a mobile communication controller, a mobile communication system, and a mobile communication method that can prevent a communication resource of a first system from remaining as a redundant resource.

The problem of the invention is solved by the subject-matter of the independent claims.

A mobile communication controller according to the fourth example is provided in a second communication system and configured to control a communication resource for establishing a radio connection with a mobile communication terminal configured to perform cell reselection from a first communication system to the second communication system. The mobile communication controller includes a reception unit configured to receive a control signal from the mobile communication terminal when the mobile communication terminal performs cell reselection to the second communication system, the control signal indicating that the mobile communication terminal was located in the first communication system before cell reselection to the second communication system; and a transmission unit configured to transmit the first communication system an instruction to release a communication resource of the first communication system in response to the control signal.

A mobile communication system according to the third example includes a first communication system; a second communication system; and a mobile communication terminal configured to perform cell reselection from the first communication system to the second communication system. The mobile communication terminal is configured to transmit the second communication system a control signal indicating that the mobile communication terminal was located in the first communication system before cell reselection to the second communication system, when the mobile communication terminal performs cell reselection to the second communication system. The second communication system is configured to transmit the first communication system an instruction to release a communication resource of the first communication system in response to the control signal.

A mobile communication method according to the eighth example is employed in a mobile communication system including a first communication system, a second communication system, and a mobile communication terminal configured to perform cell reselection from the first communication system to the second communication system. The mobile communication method includes transmitting a control signal from the mobile communication terminal to the second communication system when the mobile communication terminal perform cell reselection to the second communication system, the control signal indicating that the mobile communication
terminal was located in the first communication system before cell reselection to the second communication system; and transmitting an instruction from the second communication system to the first communication system in response to the control signal, the instruction given to release a communication resource of the first communication system.

### BRIEF DESCRIPTION OF THE DRAWINGS

[FIG. 1] FIG. 1 is a diagram illustrating a mobile communication system 100 according to a first embodiment.
[FIG. 2] FIG. 2 is a diagram illustrating a communication terminal device 10 according to the first embodiment.
[FIG. 3] FIG. 3 is a diagram illustrating a mobile communication controller 30 according to the first embodiment.
[FIG. 4] FIG. 4 is a sequence diagram illustrating an operation of the mobile communication system 100 according to the first embodiment.
[FIG. 5] FIG. 5 is a sequence diagram illustrating an operation of the mobile communication system 100 according to the first embodiment.
[FIG. 6] FIG. 6 is a sequence diagram illustrating an operation of the mobile communication system 100 according to a second embodiment.
[FIG. 7] FIG. 7 is a sequence diagram illustrating an operation of the mobile communication system 100 according to the second embodiment.

### MODES FOR CARRYING OUT THE INVENTION

Mobile communication systems according to embodiments of the present invention will be described with reference to the drawings. Note that, in the following description of the drawings, same or similar reference signs denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [Overview of Embodiment]

A mobile communication system according to each of the embodiments includes a first communication system, a second communication system, and a mobile communication terminal configured to perform cell reselection from the first communication system to the second communication system.

Firstly, the mobile communication terminal is configured to transmit a control signal indicating a request for cell reselection to the second communication system before a communication resource of the second communication system is reserved while the mobile communication terminal was located in the first communication system. The first communication system is configured to release a communication resource of the first communication system in response to the communication signal even before the communication resource of the second communication system is reserved.

As described above, the first communication system releases the communication resource of the first communication system in response to the control signal indicating the request for cell reselection to the second communication system even before the communication resource of the second communication system is reserved. Thus, the communication resource of the first communication system can be prevented from remaining as a redundant resource.

Secondly, when perform cell reselection to the second communication system, the mobile communication terminal is configured to transmit to the second communication system, a control signal indicating that the mobile communication terminal was located in the first communication system before perform cell reselection to the second communication system. The second communication system is configured to transmit an instruction to release the communication resource of the first communication system to the first communication system in response to the control signal.

As described above, the second communication system transmits the instruction to release the communication resource of the first communication system to the first communication system in response to the control signal indicating that the mobile communication terminal was located in the first communication system before cell reselection to the second communication system. Thus, the communication resource of the first communication system can be prevented from remaining as a redundant resource.

In the embodiments, a UMTS and an LTE are exemplified as communication systems. However, the communication systems are not limited to these. In the embodiments, both cell reselection from the UMTS to the LTE and cell reselection from the LTE to the UMTS are described.

### [First Embodiment]

### (Configuration of Mobile Communication System)

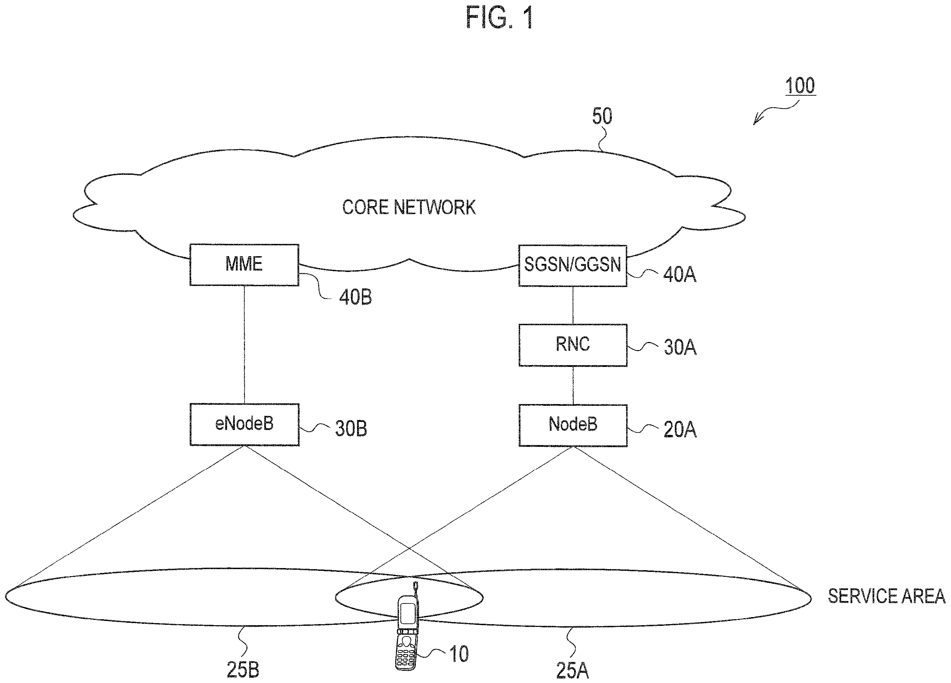

A configuration of a mobile communication system according to a first embodiment will be described below with reference to the drawings. Fig. 1 is a diagram illustrating a mobile communication system 100 according to the first embodiment.

As shown in Fig, 1, the mobile communication system 100 includes a mobile communication terminal 10, a base station 20A (hereinafter referred to as NodeB 20A), an RNC 30A, a base station 30B (hereinafter referred to as eNodeB 30B), an SGSN/GGSN 40A, an MME 40B, and a core network 50.

The Node B20A, the RNC 30A, and the SGSN/GGSN 40A are devices that belong to the UMTS (Universal Mobile Telecommunication System), and the eNodeB 30B and the MME 40B are devices that belong to the LTE (Long Term Evolution) . The SGSN/GGSN 40A and the MME 40B are devices included in the core network 50.

The communication terminal device 10 is a device configured to be capable of performing cell reselection from one communication system of the UMTS and the LTE, to the other communication system. For example, the communication terminal device 10 has a function of performing radio communications with the NodeB 20A and a function of performing radio communications with the eNodeB 30B.

In the first embodiment, "cell reselection" means that the communication terminal device 10 switches a communication system with which the communication terminal device 10 communicates in a connected state.

The NodeB 20A is a device (NodeB) that manages an area 25A and performs radio communications with the communication terminal device 10 located in the area 25A.

The RNC 30A is a device (Radio Network Controller) that is connected to the NodeB 20A and establishes a radio connection with the communication terminal device 10 located in the area 25A. Specifically, the RNC 30A controls a communication resource in the UMTS. For example, the RNC 30A controls a radio resource for establishing the radio connection (e.g., RRC connection) between the communication terminal device 10 and the RNC 30A, a circuit resource between devices such as the SGSN/GGSN 40A and the NodeB 20A, or a device resource such as memory utilization of the RNC 30A. Specifically, the communication resource includes the radio resource, the circuit resource, and the device resource described above.

The eNodeB 30B is a device (evolved NodeB) that manages an area 25B and performs radio communications with the communication terminal device 10 located in the area 25B. The eNodeB 30B establishes a radio connection with the communication terminal device 10 in the area 25B. Specifically, the eNodeB 30B controls the communication resource in the LTE. For example, the eNodeB 30B controls a radio resource for establishing a radio connection (e.g., RRC connection) between the communication terminal device 10 and the eNodeB 30B.

In the first embodiment, the RNC 30A and the eNodeB 30B are examples of a mobile communication controller configured to control the communication resource for establishing the radio connection with the communication terminal device 10.

The SGSN/GGSN 40A is a device (SGSN; Serving GPRS Support Node or GGSN; Gateway GPRS Support Node) configured to exchange packets in a packet exchange domain. Although not illustrated in Fig. 1, a device (Mobile Switching Center) configured to perform call switching in a call switching domain.

The MME 40B is a device (Mobility Management Entity) that is connected to the eNodeB 30B and manages the mobility of the communication terminal device 10 that established a radio connection with the eNodeB 30B.

### (Configuration of Mobile Communication Terminal)

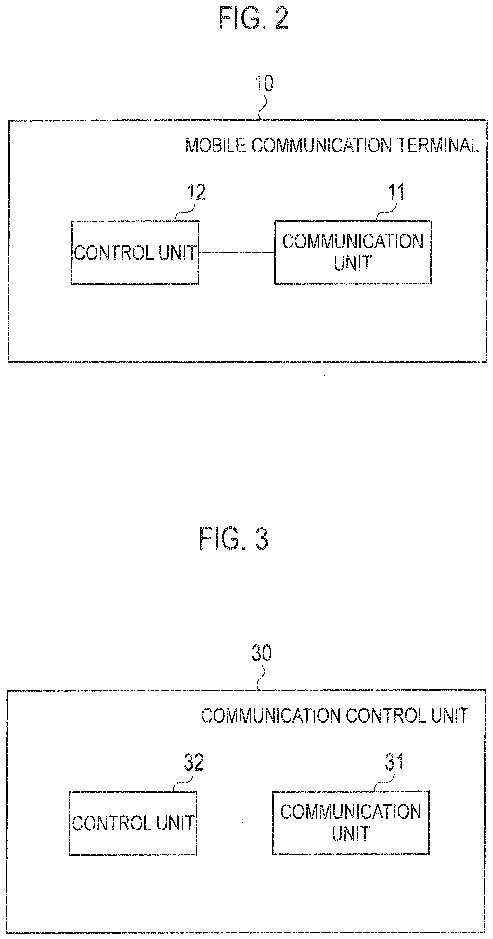

The configuration of the mobile communication terminal according to the first embodiment will be described below with reference to the drawings. Fig. 2 is a diagram illustrating the communication terminal device 10 according to the first embodiment. As shown in FIG. 2, the communication terminal device 10 includes a communication unit 11 and a control unit 12 .

The communication unit 11 communicates with the UMTS through the radio connection established with the RNC 30A through the NodeB 20A. The communication unit 11 also communicates with the LTE through the radio connection established with the eNodeB 30B.

In the first embodiment, the communication unit 11 transmits or receives a control signal for establishing the radio connection (e.g. , RRC Connection) with the RNC 30A or the eNodeB 30B. Similarly, the communication unit 11 transmits or receives a control signal for releasing the radio connection (e.g., RRC Connection) established with the RNC 30A or the eNodeB 30B.

The control unit 12 controls the communication terminal device 10 entirely. For example, the control unit 12 controls and thus makes the communication unit 11 transmit the control signal for establishing or releasing the radio connection (e.g., RRC Connection).

In the first embodiment, the control unit 12 controls and thus makes the communication unit 11 transmit a control signal indicating a request for cell reselection to the second communication system to the first communication system before the communication resource of the second communication system is reserved while the communication terminal device 10 was located in the first communication system.

"Request for cell reselection to the second communication system" may be a request for cell reselection to a particular communication cell of the second communication system. For example, the particular cell includes a cell managed by an HeNB: Home eNodeB, a femto cell, a CSG (Closed Subscriber Group) cell configured to be capable of setting a connection authorized user. Alternatively, the request for cell reselection to the second communication system may be a request for cell reselection to the second communication system in a case where the communication terminal 10 autonomously operates.

When transmitting the control signal indicating the request for cell reselection to the second communication system, the communication terminal device 10 or the first communication system is preferably aware that the communication terminal device 10 is adjacent to or in an area of a communication cell of the second communication system as a target of the cell reselection request. Thus, the communication terminal device 10 preferably measures in advance the received quality of a control signal (CPICH) from the second communication system. Alternatively, the communication terminal device 10 stores in advance, a location and a frequency of a connected communication cell in the second communication system (Finger Print). The communication terminal device 10 may include information indicating the location and the frequency of the communication cell in the control signal.

Here, the first communication system may be the UMTS and the second communication system may be the LTE. It should be noted that the first communication unit may be the LTE and the second communication unit may be the UMTS.

### (Configuration of Mobile Communication controller)

A configuration of the mobile communication controller according to the first embodiment will be described with reference to the drawings. Fig. 3 is a diagram illustrating the mobile communication controller 30 according to the first embodiment. As shown in Fig. 3, the mobile communication controller 30 includes a communication unit 31 and a control unit 32.

In the first embodiment, the mobile communication controller 30 is a device that controls the communication resource in the first communication system in a case where the communication terminal device 10 performs cell reselection from the first communication system to the second communication system.

As described above, the RNC 30A and the eNodeB 30B are examples of the mobile communication controller 30. Thus, when the UMTS is the first communication system, the mobile communication controller 30 is the RNC 30A, and when the LTE is the first communication system, the mobile communication controller 30 is the eNodeB 30B.

The communication unit 31 communicates with the communication terminal device 10 through the radio connection established with the communication terminal device 10.

In the first embodiment, the communication unit 31 transmits or receives a control signal for establishing the radio connection (e.g. , RRC Connection) with the communication mobile terminal 10. Similarly, the communication unit 31 transmits or receives a control signal for releasing the radio connection (e.g., RRC Connection) established with the communication terminal device 10.

In the first embodiment, the communication unit 31 receives the control signal indicating the request for cell reselection to the second communication system before the communication resource of the second communication system is reserved while the communication terminal device 10 was located in the first communication system.

The control unit 32 controls the mobile communication controller 30 entirely. For example, the control unit 32 controls and thus makes the communication unit 31 transmit the control signal for controlling the establishment or releasing of the radio connection (e.g., RRC Connection).

In the first embodiment, upon receiving the control signal indicating the request for cell reselection to the second communication system, the control unit 32 releases the communication resource of the first communication system even before the communication resource of the second communication system is reserved.

### (Operation of Mobile Communication System)

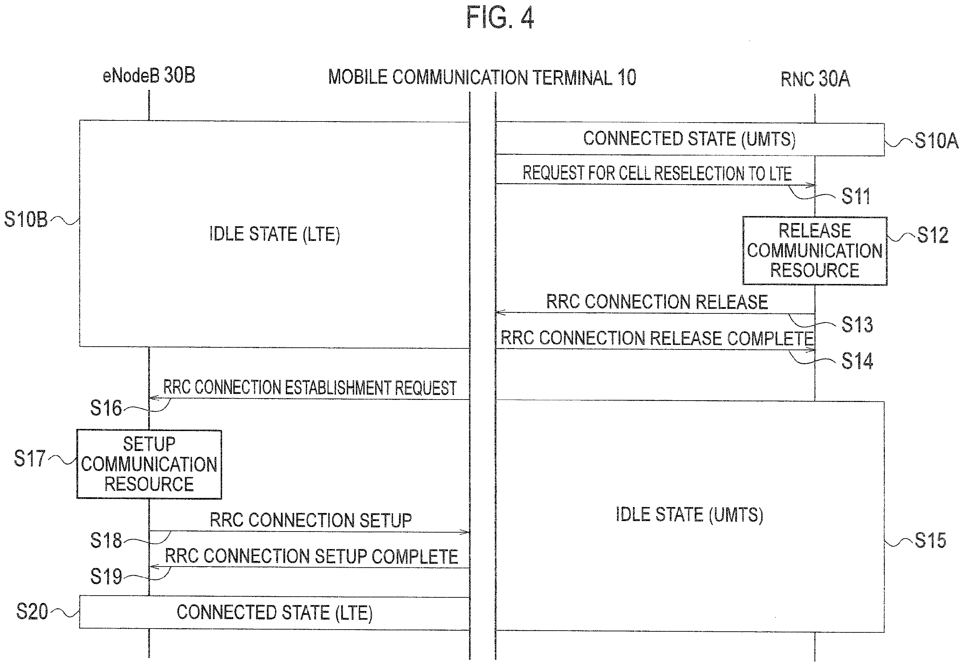

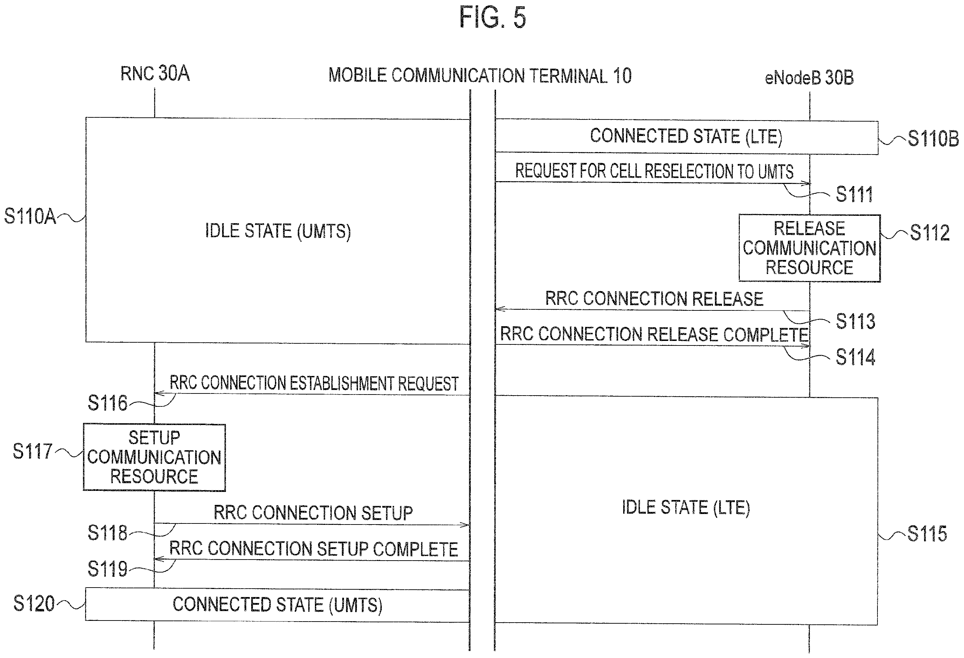

Operations of the mobile communication system according to the first embodiment will be described below with reference to the drawings. Fig. 4 and Fig. 5 are sequence diagrams illustrating the operations of the mobile communication system 100 according to the first embodiment.

Firstly, a case where the communication terminal device 10 performs cell reselection from the UMTS to the LTE will be described with reference to Fig. 4. Specifically, in Fig. 4, the UMTS is the first communication system and the LTE is the second communication system.

As shown in Fig. 4, the communication terminal device 10 is in the connected state in the UMTS at Step 10A. At Step 10B the communication terminal device 10 is in an idle state in the LTE.

At Step 11, the communication terminal device 10 transmits the control signal (Preferred to LTE) indicating the request for cell reselection to the LTE through a message in an RRC layer (layer 3) to the RNC 30A. It should be noted that the communication resource of the LTE is not reserved at this stage.

At Step 12 the RNC 30A releases the communication resource of the UMTS.

At Step S13, the RNC 30A transmits RRC Connection Release to the communication terminal device 10 through a message in the RRC layer (layer 3).

At Step 14, the communication terminal device 10 transmits RRC Connection Release Complete to the RNC 30A through a message in the RRC layer (layer 3).

At Step 15, the mobile communication terminal 10 transitions to the idle state in the UMTS. Specifically, the communication terminal device 10 transitions from the connected state to the idle state in the UMTS through the processing at Step 12 to Step 14.

At Step 16, the communication terminal device 10 transmits RRC Connection Request to the eNodeB 30B through a message in the RRC layer (layer 3).

It should be noted that the processing at Step 16 is automatically performed by the communication terminal device 10 through a redirection procedure or a reconnection procedure. It should be noted that, alternatively, the processing at Step 16 is performed by the communication terminal device 10 through a NAS (Non Access Stratum) Recovery procedure (e.g., 3GPP TS25.331 v9.0.0).

At Step 17 the eNodeB 30B sets up the communication resource of LTE.

At Step 18, the eNodeB 30B transmits RRC Connection Setup to the communication terminal device 10 through a message in the RRC layer (layer 3).

At Step 19, the communication terminal device 10 transmits RRC Connection Setup Complete to the eNodeB 30B through a message in the RRC layer (layer 3).

At Step 20, the mobile communication terminal 10 transitions to the connected state in the LTE. Specifically, the communication terminal device 10 transitions from the idle state to the connected state in the LTE through the processing at Step 16 to Step 19.

Secondly, a case where the communication terminal device 10 performs cell reselection from the LTE to the UMTS will be described with reference to Fig. 5. Specifically, in Fig. 5, the LTE is the first communication system and the UMTS is the second communication system.

As shown in Fig. 5, the communication terminal device 10 is in the idle state in the UMTS at Step 110A. At Step 110B, the communication terminal device 10 is in the connected state in the LTE.

At Step 111, the communication terminal device 10 transmits the control signal (Preferred to UMTS) indicating the request for cell reselection to the UMTS to the eNodeB 30B through a message in the RRC layer (layer 3). It should be noted that the communication resource of the UMTS is not reserved at this stage.

At Step 112 the eNodeB 30B releases the communication resource of the LTE.

At Step S113, the eNodeB 30B transmits RRC Connection Release to the communication terminal device 10 through a message in the RRC layer (layer 3).

At Step 114, the communication terminal device 10 transmits RRC Connection Release Complete to the eNodeB 30B through a message in the RRC layer (layer 3).

At Step 115, the mobile communication terminal 10 transitions to the idle state in the LTE. Specifically, the communication terminal device 10 transitions from the connected state to the idle state in the LTE through the processing at Step 112 to Step 114.

At Step 116, the communication terminal device 10 transmits RRC Connection Request to the RNC 30A through a message in the RRC layer (layer 3).

It should be noted that the processing at Step 116 is automatically performed by the communication terminal device 10 through the redirection procedure or the reconnection procedure. It should be noted that, alternatively, the processing at Step 116 is performed by the communication terminal device 10 through the NAS (Non Access Stratum) Recovery procedure

At Step 117 the RNC 30A sets up the communication resource of the UMTS.

At Step 118, the RNC 30A transmits RRC Connection Setup to the communication terminal device 10 through a message in the RRC layer (layer 3).

At Step 119, the communication terminal device 10 transmits RRC Connection Setup Complete to the RNC 30A through a message in the RRC layer (layer 3).

At Step 120, the mobile communication terminal 10 transitions to the connected state in the UMTS. Specifically, the communication terminal device 10 transitions from the connected state to the idle state in the UMTS through the processing at Step 116 to Step 119.

### (Operation and Effect)

In the first embodiment, the first communication system releases the communication resource of the first communication system in response to the control signal indicating the request for cell reselection to the second communication system even before the communication resource of the second communication system is reserved. Thus, the communication resource of the first communication system can be prevented from remaining as a redundant resource.

The communication may be momentarily disconnected during the cell reselection from the first communication system to the second communication system. However, it should be noted that the radio connection between the communication terminal device 10 and the second communication system is established through the redirection procedure, the reconnection procedure, or the NAS Recovery procedure, and thus the communication is not disconnected.

### [Second Embodiment]

A second embodiment will be described below with reference to the drawings. The difference from the first embodiment will be mainly described below.

In the first embodiment, the communication terminal device 10 transmits the control signal indicating the request for cell reselection to the second communication system to the first communication system before the communication resource of the second communication system is reserved while the communication terminal device 10 was located in the first communication system. The first communication system (mobile communication controller 30) releases the communication resource of the first communication system in response to the control signal indicating the request for cell reselection to the second communication system even before the communication resource of the second communication system is reserved.

In contrast, in the second embodiment, the communication terminal device 10 transmits the second communication system a control signal indicating that the communication terminal device 10 was located in the first communication system before cell reselection to the second communication system. The second communication system (mobile communication controller 30) transmits an instruction to release the communication resource of the first communication system to the first communication system in response to the control signal indicating that the communication terminal device 10 was located in the first communication system before cell reselection to the second communication system.

In the second embodiment, the mobile communication controller 30 is a device that controls the communication resource in the second communication system in a case where the communication terminal device 10 performs cell reselection from the first communication system to the second communication system.

As described above, the RNC 30A and the eNodeB 30B are examples of the mobile communication controller 30. Thus, when the UMTS is the second communication system, the mobile communication controller 30 is the RNC 30A, and when the LTE is the second communication system, the mobile communication controller 30 is the eNodeB 30B.

### (Operation of Mobile Communication System)

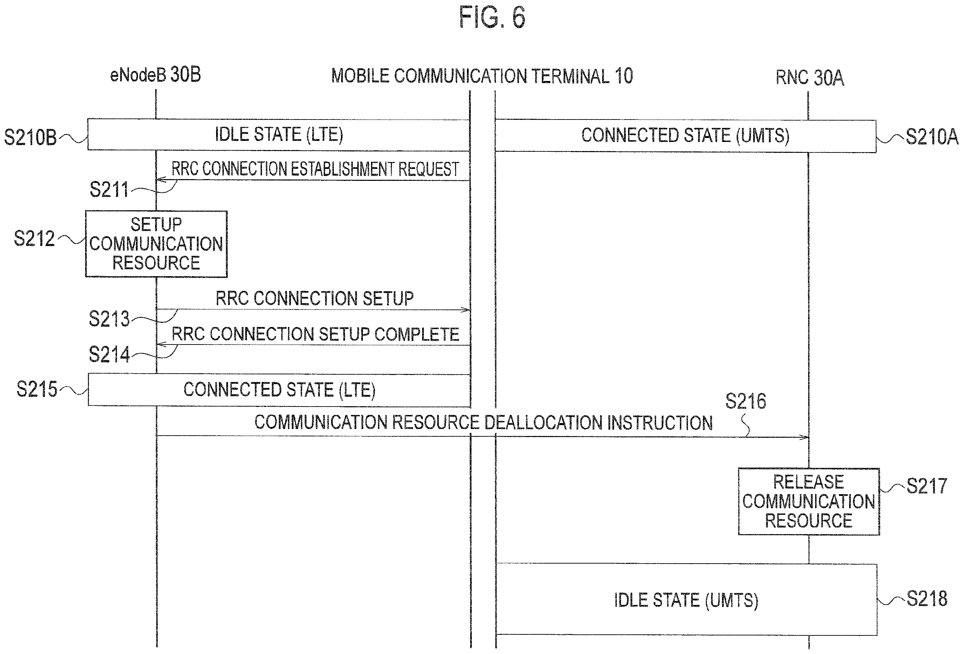

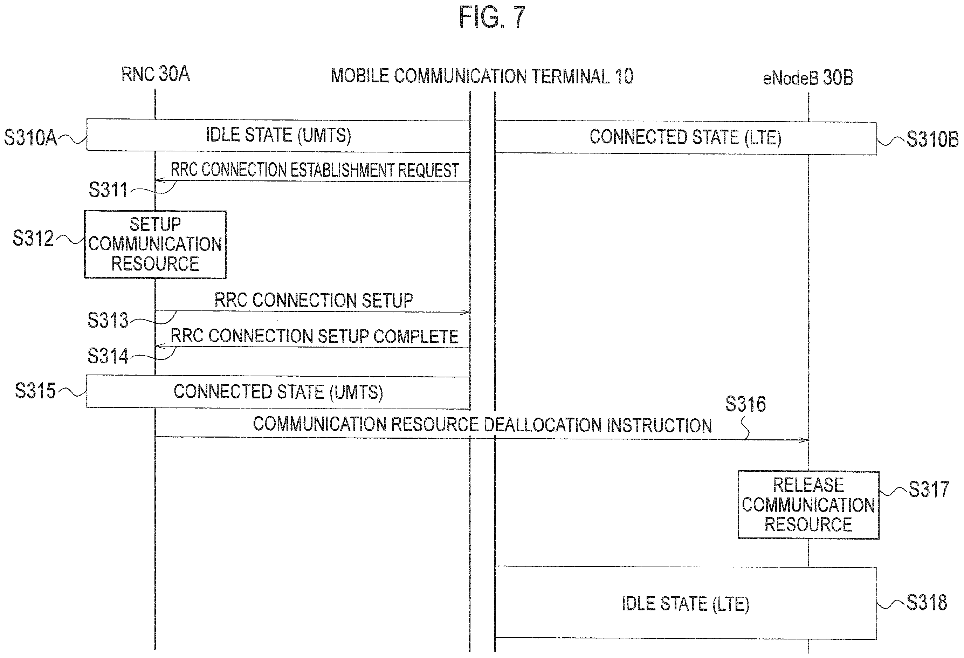

Operations of a mobile communication system according to the second embodiment will be described below with reference to the drawings. Fig. 6 and Fig. 7 are sequence diagrams illustrating the operations of the mobile communication system 100 according to the second embodiment.

Firstly, a case where the communication terminal device 10 performs cell reselection from the UMTS to the LTE will be described with reference to Fig. 6. Specifically, in Fig. 6, the UMTS is the first communication system and the LTE is the second communication system.

As shown in Fig. 6, the communication terminal device 10 is in the connected state in the UMTS at Step 210A. At Step 210B the communication terminal device 10 is in the idle state in the LTE.

At Step 211, the communication terminal device 10 transmits RRC Connection Request to the eNodeB 30B through a message in the RRC layer (layer 3).

The communication terminal device 10 transmits the control signal indicating that the communication terminal device 10 was located in the UMTS before cell reselection to the LTE together with RRC Connection Request to the eNodeB 30B.

At Step 212 the eNodeB 30B sets up the communication resource of the LTE.

At Step 213, the eNodeB 30B transmits RRC Connection Setup to the communication terminal device 10 through a message in the RRC layer (layer 3).

At Step 214, the communication terminal device 10 transmits RRC Connection Setup Complete to the eNodeB 30B through a message in the RRC layer (layer 3).

At Step 215, the mobile communication terminal 10 transitions to the connected state in the LTE. Specifically, the communication terminal device 10 transitions from the idle state to the connected state in the LTE through the processing at Step 211 to Step 214.

At Step 216, the eNodeB 30B transmits the instruction (communication resource release instruction) to release the communication resource of the UMTS to the RNC 30A. The communication resource release instruction is transmitted from the eNodeB 30B to the RNC 30A through the core network 50.

At Step 217 the RNC 30A releases the communication resource of the UMTS.

At Step S218, the communication terminal device 10 is in the idle state in the UMTS. It should be noted that, specifically, the communication terminal device 10 transmits to the idle state in the UMTS through the processing at Step 211.

Secondly, a case where the communication terminal device 10 performs cell reselection from the LTE to the UMTS will be described with reference to Fig. 7. Specifically, in Fig. 7, the LTE is the first communication system and the UMTS is the second communication system.

As shown in Fig. 7, the communication terminal device 10 is in the idle state in the UMTS at Step 310A. At Step 310B the communication terminal device 10 is in the connected state in the LTE.

At Step 311, the communication terminal device 10 transmits RRC Connection Request to the RNC 30A through a message in the RRC layer (layer 3).

The communication terminal device 10 transmits the control signal indicating that the communication terminal device 10 was located in the LTE before cell reselection to the UMTS to the RNC 30A together with RRC Connection Request.

At Step 312 the RNC 30A sets up the communication resource of UMTS.

At Step 313, the RNC 30A transmits RRC Connection Setup to the communication terminal device 10 through a message in the RRC layer (layer 3).

At Step 314, the communication terminal device 10 transmits RRC Connection Setup Complete to the RNC 30A through a message in the RRC layer (layer 3).

At Step 315 the communication terminal device 10 transitions to the connected state in UMTS. Specifically, the communication terminal device 10 transitions from the idle state to the connected state in the UMTS through the processing at Step 311 to Step 314.

At Step 316, the RNC 30A transmits the instruction (communication resource release instruction) to release the communication resource of the LTE to the eNodeB 30B. The communication resource release instruction is transmitted from the RNC 30A to the eNodeB 30B through the core network 50.

At Step 317, the eNodeB 30B releases the communication resource of the LTE.

At Step 318, the communication terminal device 10 is in the idle state in LTE. Specifically, the communication terminal device 10 transitions to the idle state in the LTE through the processing at Step 311.

### (Operation and Effect)

In the second embodiment, the second communication system transmits the instruction to release the communication resource of the first communication system to the first communication system in response to the control signal indicating that the communication terminal device was located in the first communication system before cell reselection to the second communication system. Thus, the communication resource of the first communication system can be prevented from remaining as a redundant resource.

In the embodiments, the UTMS and the LTE are only exemplified as the communication systems. Thus, the communication system may be other communication systems (e.g., GSM) .

### INDUSTRIAL APPLICABILITY

The present invention can prevent a communication resource of a first system from remaining as a redundant resource when the mobile communication terminal performs cell reselection from the first communication system to the second communication system, and thus is useful in radio communications and the like.

### EXPLANATION OF THE REFERENCE NUMERALS

10...communication terminal device
11...communication unit
12...control unit
20A...NodeB
25A...area
25B...area
30B...mobile communication controller
30A...RNC
30B...eNodeB
31...communication unit
32...control unit
40A...SGSN/GGSN
40B...MME
50...core network
100...mobile communication system

## Claims

1. A mobile communication controller (30B) provided in a second communication system and configured to control a communication resource for establishing a radio connection with a mobile communication terminal (10) configured to perform cell reselection from a connected state in a first communication system to an idle state in the second communication system, comprising:
a reception unit (31) configured to receive a control signal from the mobile communication terminal (10) when the mobile communication terminal (10) performs cell reselection to the second communication system, the control signal indicating that the mobile communication terminal (10) was located in the first communication system before cell reselection to the second communication system, and
a control unit (32) configured to transmit an instruction to release a communication resource of the first communication system to the first communication system in response to the control signal indicating that the mobile communication terminal was located in the first communication system before cell reselection to the second communication system.

2. A mobile communication system (100) comprising:
a first communication system;
a second communication system; and
a mobile communication terminal (10) configured to perform cell reselection from a connected state in the first communication system to an idle state in the second communication system, wherein
the mobile communication terminal (10) is configured to transmit the second communication system a control signal indicating that the mobile communication terminal (10) was located in the first communication system before cell reselection to the second communication system, when the mobile communication terminal (10) performs cell reselection to the second communication system, and
a control unit (32), provided in the second communication system, configured to transmit an instruction to release a communication resource of the first communication system to the first communication system in response to the control signal indicating that the mobile communication terminal was located in the first communication system before cell reselection to the second communication system.

3. A mobile communication method employed in a mobile communication system (100) including a first communication system, a second communication system, and a mobile communication terminal (10) configured to perform cell reselection from a connected state in the first communication system to an idle state in the second communication system, comprising:
transmitting a control signal from the mobile communication terminal (10) to the second communication system when the mobile communication terminal (10) performs cell reselection to the second communication system, the control signal indicating that the mobile communication terminal (10) was located in the first communication system before cell reselection to the second communication system; and
transmitting, from the second communication system, an instruction to release a communication resource of the first communication system to the first communication system in response to the control signal indicating that the mobile communication terminal was located in the first communication system before cell reselection to the second communication system.

## Patentansprüche

1. Mobilkommunikationssteuerung (30B), die in einem zweiten Kommunikationssystem bereitgestellt ist und dazu konfiguriert ist, eine Kommunikationsressource zum Aufbauen einer Funkverbindung mit einem Mobilkommunikationsendgerät (10) zu steuern, das dazu konfiguriert ist, eine Zellenneuauswahl aus einem verbundenen Zustand in einem ersten Kommunikationssystem in einen Ruhezustand in dem zweiten Kommunikationssystem durchzuführen, umfassend:
eine Empfangseinheit (31), die dazu konfiguriert ist, ein Steuersignal von dem Mobilkommunikationsendgerät (10) zu empfangen, wenn das Mobilkommunikationsendgerät (10) eine Zellenneuauswahl in das zweite Kommunikationssystem durchführt, wobei das Steuersignal anzeigt, dass sich das Mobilkommunikationsendgerät (10) vor der Zellenneuauswahl in das zweite Kommunikationssystem in dem ersten Kommunikationssystem befand, und
eine Steuereinheit (32), die dazu konfiguriert ist, eine Anweisung zum Freigeben einer Kommunikationsressource des ersten Kommunikationssystems als Reaktion darauf an das erste Kommunikationssystem zu übertragen, dass das Steuersignal anzeigt, dass sich das Mobilkommunikationsendgerät vor der Zellenneuauswahl in das zweite Kommunikationssystem in dem ersten Kommunikationssystem befand.

2. Mobilkommunikationssystem (100), umfassend:
ein erstes Kommunikationssystem;
ein zweites Kommunikationssystem; und
ein Mobilkommunikationsendgerät (10), das dazu konfiguriert ist, eine Zellenneuauswahl aus einem verbundenen Zustand in dem ersten Kommunikationssystem in einen Ruhezustand in dem zweiten Kommunikationssystem durchzuführen, wobei
das Mobilkommunikationsendgerät (10) dazu konfiguriert ist, an das zweite Kommunikationssystem ein Steuersignal zu übertragen, das anzeigt, dass sich das Mobilkommunikationsendgerät (10) vor der Zellenneuauswahl in das zweite Kommunikationssystem in dem ersten Kommunikationssystem befand, wenn das Mobilkommunikationsendgerät (10) die Zellenneuauswahl in das zweite Kommunikationssystem durchführt, und
eine Steuereinheit (32), die in dem zweiten Kommunikationssystem bereitgestellt ist und dazu konfiguriert ist, eine Anweisung zum Freigeben einer Kommunikationsressource des ersten Kommunikationssystems als Reaktion darauf an das erste Kommunikationssystem zu übertragen, dass das Steuersignal anzeigt, dass sich das Mobilkommunikationsendgerät vor der Zellenneuauswahl in das zweite Kommunikationssystem in dem ersten Kommunikationssystem befand.

3. Mobilkommunikationsverfahren, das in einem Mobilkommunikationssystem (100) eingesetzt wird, das ein erstes Kommunikationssystem, ein zweites Kommunikationssystem und ein Mobilkommunikationsendgerät (10) aufweist, das dazu konfiguriert ist, eine Zellenneuauswahl aus einem verbundenen Zustand in dem ersten Kommunikationssystem in einen Ruhezustand in dem zweiten Kommunikationssystem durchzuführen, umfassend:
Übertragen eines Steuersignals von dem Mobilkommunikationsendgerät (10) an das zweite Kommunikationssystem, wenn das Mobilkommunikationsendgerät (10) eine Zellenneuauswahl in das zweite Kommunikationssystem durchführt, wobei das Steuersignal anzeigt, dass sich das Mobilkommunikationsendgerät (10) vor der Zellenneuauswahl in das zweite Kommunikationssystem in dem ersten Kommunikationssystem befand; und
Übertragen, von dem zweiten Kommunikationssystem, einer Anweisung zum Freigeben einer Kommunikationsressource des ersten Kommunikationssystems an das erste Kommunikationssystem als Reaktion darauf, dass das Steuersignal anzeigt, dass sich das Mobilkommunikationsendgerät vor der Zellenneuauswahl in das zweite Kommunikationssystem in dem ersten Kommunikationssystem befand.

## Revendications

1. Dispositif de commande de communication mobile (30B) prévu dans un second système de communication et configuré pour commander une ressource de communication pour établir une connexion radio avec un terminal de communication mobile (10) configuré pour effectuer une resélection de cellule depuis un état connecté dans un premier système de communication vers un état de repos dans le second système de communication, comprenant :
une unité de réception (31) configurée pour recevoir un signal de commande de la part du terminal de communication mobile (10) lorsque le terminal de communication mobile (10) effectue une resélection de cellule à destination du second système de communication, le signal de commande indiquant que le terminal de communication mobile (10) était situé dans le premier système de communication avant la resélection de cellule à destination du second système de communication, et
une unité de commande (32) configurée pour transmettre une instruction pour libérer une ressource de communication du premier système de communication à destination du premier système de communication en réponse au signal de commande indiquant que le terminal de communication mobile était situé dans le premier système de communication avant la resélection de cellule à destination du second système de communication.

2. Système de communication mobile (100) comprenant :
un premier système de communication ;
un second système de communication ; et
un terminal de communication mobile (10) configuré pour effectuer une resélection de cellule depuis un état connecté dans le premier système de communication vers un état de repos dans le second système de communication, dans lequel
le terminal de communication mobile (10) est configuré pour transmettre au second système de communication un signal de commande indiquant que le terminal de communication mobile (10) était situé dans le premier système de communication avant la resélection de cellule à destination du second système de communication, lorsque le terminal de communication mobile (10) effectue une resélection de cellule à destination du second système de communication, et
une unité de commande (32), prévue dans le second système de communication, configurée pour transmettre une instruction pour libérer une ressource de communication du premier système de communication à destination du premier système de communication en réponse au signal de commande indiquant que le terminal de communication mobile était situé dans le premier système de communication avant la resélection de cellule à destination du second système de communication.

3. Procédé de communication mobile employé dans un système de communication mobile (100) incluant un premier système de communication, un second système de communication, et un terminal de communication mobile (10) configuré pour effectuer une resélection de cellule depuis un état connecté dans le premier système de communication vers un état de repos dans le second système de communication, comprenant :
transmettre un signal de commande depuis le terminal de communication mobile (10) vers le second système de communication lorsque le terminal de communication mobile (10) effectue une resélection de cellule à destination du second système de communication, le signal de commande indiquant que le terminal de communication mobile (10) était situé dans le premier système de communication avant la resélection de cellule à destination du second système de communication ; et
transmettre, depuis le second système de communication, une instruction pour libérer une ressource de communication du premier système de communication à destination du premier système de communication en réponse au signal de commande indiquant que le terminal de communication mobile était situé dans le premier système de communication avant la resélection de cellule à destination du second système de communication.
